# EUROPEAN PATENT APPLICATION

(11) **EP 0 579 582 A1**
(43) Date of publication of application: **19.01.1994**
(21) Application number: 93830241.1
(22) Date of filing: 28.05.1993
(51) Int. Cl.: B27G 21/00, B23Q 3/00

(54) **A protection apparatus for free-shaft working on vertical shapers**

(30) Priority: 22.06.1992 IT VR920059
(71) Applicant: OM. GARNIGA S.r.l., I-38060 Isera (Trento) (IT)
(72) Inventor: Garniga, Giovanni, Isera (Trento) (IT)
(74) Representative: Lanzoni, Luciano

(57) **Abstract**

A protection apparatus (1) for free-shaft working on a router, comprising: - a support structure (2), movably fixable on a work plane (3) of the router and equipped with a chamber in which a shaft (5) is housed, which shaft (5) projects from the plane (3) of the router and bears one or more groups of rotating tools; - a retaining organ (9), supported by said support structure (2), inferiorly equipped with a plurality of single retaining elements (11) which are mobile and independent among themselves, said retaining organ (9) permitting of maintaining a workpiece (26) constantly in a desired work position with respect to said groups of rotating tools; - raising and lowering means (16) of said retaining organ (9) with respect to the plane (3) of the router; - activating means of said raising and lowering means (16); - a transparent protection wall (23) solid to said retaining organ (9) partially closing said chamber of said support structure (2).

## Description

The invention relates to a protection apparatus for free-shaft working on routers.

As is known, vertical-arm millers having a horizontal work plane for wood working, are equipped with a protection casing having straight regulatable guides for milling straight elements.

This protection cannot be used when curved elements have to be worked on, so the operator must work without protection and runs a considerable risk of injuring his hands, since he must keep the workpiece in position againsts the false guide, constituted by a bearing positioned on the arm together with the rotating tool. A moment of carelessness during the working may cause a violent rejection of the workpiece in the rotation direction of the tool.

To obviate the above drawback, the protector described in the patent for Utility Model no. 197,803 was developed.

The above protector, of known type, is substantially constituted by a structure fixable to a work plane of the router, on which structure a vertical shaft is mounted, superiorly equipped with a handle which permits of raising and lowering the retaining element of the workpiece.

The retaining element inferiorly exhibits teeth, shaped so as to prevent undesired movements of the workpiece with respect to the rotation direction of the tool. The retaining element, exhibiting a flat curved conformation, is mounted so as to be able to oscillate with respect to its ends in such a way as to adapt to the breadth of the workpiece.

The protector which is the object of patent no. 197,803 presents, however, several drawbacks.
a) When the workpiece is superiorly convex in shape, the retaining strength is insufficient since the workpiece rests only on a point of the inferior part of the retaining element.
b) The transparent protection casing is consituted by a closed cover, thus not allowing large upwards movements of the tool shaft. This drawback is particularly relevant when the workpiece is to be subjected to working by the lower group of tools mounted on the rotating shaft, since in this case the shaft must be raised considerably with respect to the work plane of the router.
c) The tubular support elements of the retaining element, when translated horizontally by action of the workpiece, are subject to flexion and torsion forces which, in the long run, can lead to their deformation and even breakage.
d) When it is necessary to use a shaft which projects considerably from the router plane, it is necessary to remove the protection cover and consequently there is no protection for the operator.
e) An operative disadvantage is constituted by the laborious regulation of the vertical movement of the protection cover and the retaining element. A handle is provided, mounted on the top of a shaft, which handle, when activated, permits of moving vertically the protection cover - retaining element group. Before activating the handle it is necessary to loosen a blocking screw. In substance, it is necessary to: loosen the blocking screw; activate the handle for the raising of the group; bring the group into the desired position; tighten the blocking screw. This obviously leads to waste of time.
f) A further drawback of an operative nature is constituted by the laborious regulation of the horizontal plane of the shaft bearing at its top the regulation handle. This shaft moves horizontally by means of a threaded bar and is blocked in the desired position by means of a lever-operated mechinical pivot. This operation is also time-wasting for the operator.
g) All the movements of all the protector organs in question are performed by activating numerous regulation and blocking handles. As a consequence, the use of the said protector is laborious and clumsy.
h) The protector in question is not equipped with any sawing-aspiration system. Thus, when the operator is at work, a sort of sawing turbine is created within the protection cover which reduces visibility. Furthermore, in the case of work with exotic woods, the dust produced can be damaging to the health if breathed in.

An essential aim of the present invention is thus to obviatie the above-mentioned drawbacks, relative to protection equipment of know types, by providing an apparatus which is at the same time simple to make, operatively reliable and easy and fast to regulate, as well as being extremely robust and relatively inexpensive.

These and other aims besides are all attained by the protection apparatus object of the present invention, which principal characteristics are set out in the claims which follow.

Further characteristics and advantages of the present invention will better emerge from the detailed description that follows, of an embodiment of the invention, herein illustrated purely in the form of a non-limiting example in the accompanying figures, in which:

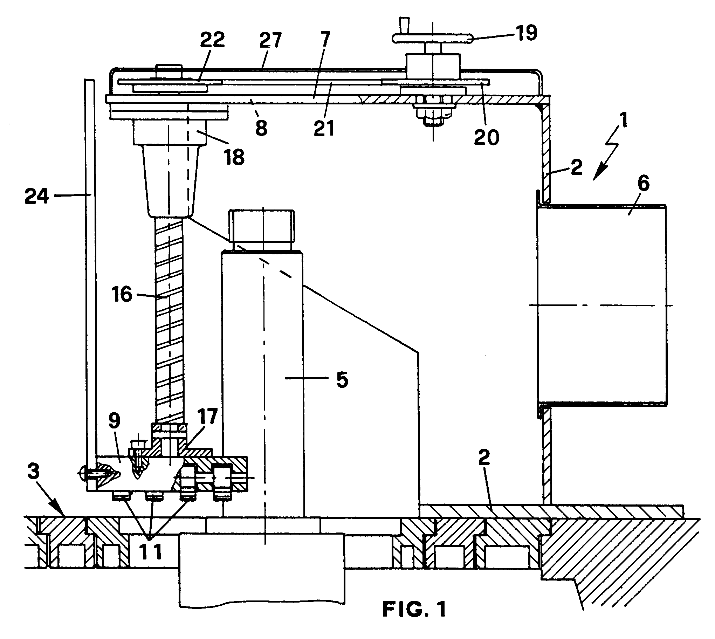

- figure 1 shows the apparatus in a lateral view with some parts removed better to evidence others;

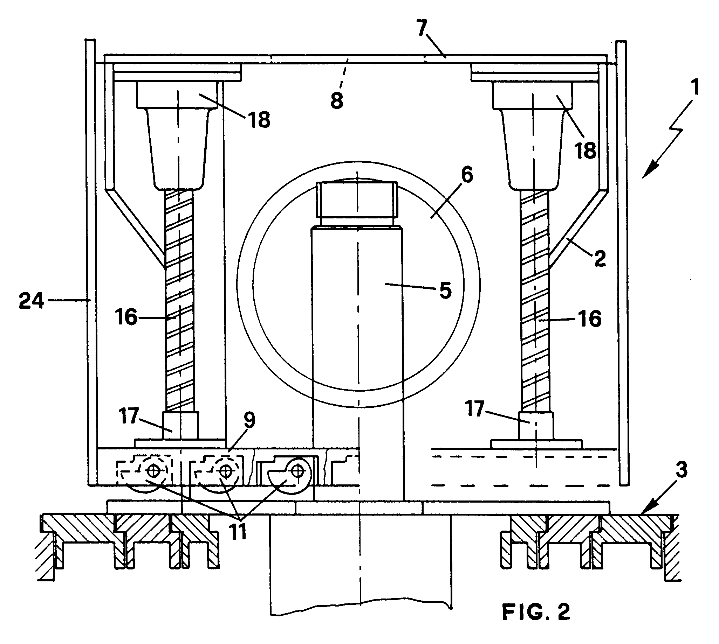

- figure 2 shows the apparatus in a frontal view with some parts removed better to evidence others;
- figure 3 shows the apparatus in a view from above with half the upper plane remove in order better to evidence the part underlying it;
- figure 4 shows one of the retaining elements in a lateral view.

With reference to the drawings, 1 denotes in its entirety the protection apparatus of the present invention.

It comprises substantially the following components. A robust support structure 2 is fixable on the plane 3 of the router by means of screws insertable into slots 4 cut into the plateshaped horizontal posterior base of the support structure 2. The support structure 2 exhibits a chamber in which the shaft 5 is housed, exiting from the plane 3 of the router, bearing one or more groups of rotating tools (not illustrated) for working on wood workpieces 26 manoeuvred by an operator on the plane 3 of the router.

The support structure 2 further exhibits a posterior vertical wall equipped with a hole 6 aimed at receiving an aspiration tube (not illustrated) of the sawings which form in the chamber of the support structure 2 during the working of the workpiece 26 by the tools mounted on the shaft 5.

The support structure 2 further exhibits a superior plane 9 equipped with a cover 27 and a hole 8 arranged coaxially to the shaft 5, which hole 8 affords the passage of the shaft 5 itself, when it must be raised above the height of the support structure 2. 9 denotes a retaining organ formed by a plate-shaped body and laterally exhibiting a notch 10 positioned at the shaft 5 position where it exits from the plane 3.

The retaining organ 9, which aim is to maintain the desired work position of the workpiece 26 during working with respect to the rotating tools mounted on the shaft 5, is inferiorly equipped with a plurality of single retaining elements 11, mobile and independent among themselves.

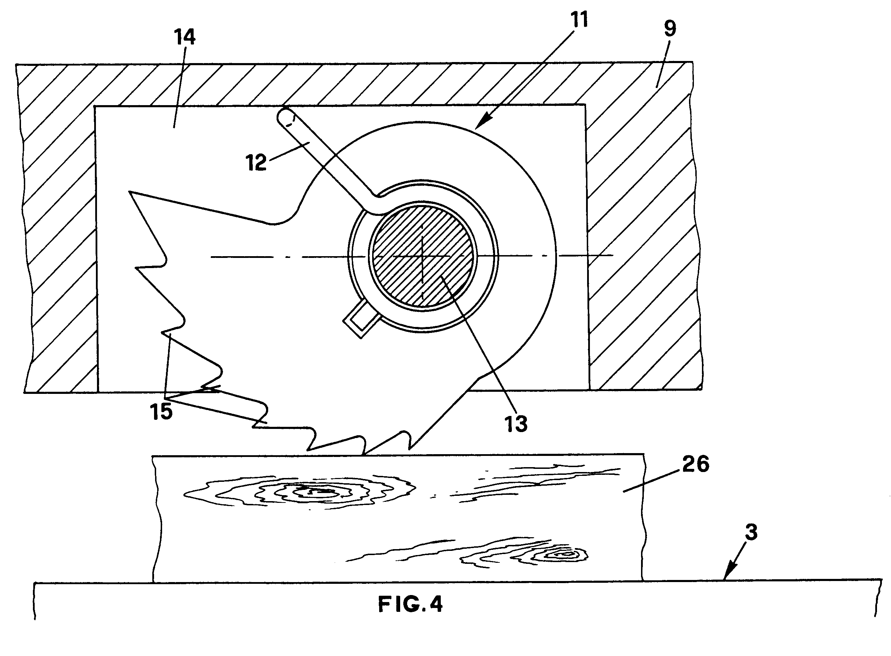

Each of the retaining elements 11 (see figure 4) is formed by a shaped body, able to rotate in contrast to the action of a spring 12, about a horizontal pivot 13 and in a housing 14 made in the retaining organ 9. As is shown in figure 4, each retaining element 11 exhibits a series of teeth 15 with pointed profiles, aligned along a curve of a circle with its centre on the axis of the horizontal pivot 13. This conformation permits of maintaining the workpiece 26 in a correct position so that its rejection in the direction of the rotation of the shaft 5 is avoided. The action of the tool on the workpiece 26 determines the insertion into the workpiece 26 of a greater number of teeth and progressively larger teeth, too, so that the pushing action exerted by the tool on the workpiece 26 excludes the rejection of the same.

The fact of having a plurality of retaining elements 11 which are mobile and independent among themselves permits a retaining action even when the surface of the pivot, placed in contact with the retaining organ 9, exhibits surface convexities or or non-uniformities.

The retaining organ 9 can be raised or lowered with respect to the plane 3 of the router in accordance with the sizes of the workpiece 26 to be worked on.

Such a regulation is performed by raising and lowering means constituted by a couple of threaded columns 16, each of which is inferiorly fixed to the retaining organ 9 by means of a connecting flange 17 and is superiorly connected to the superior plane 7 of the support structure 2 by means of a threaded bushing 18.

The activating of the threaded columns 16, which permits vertical movement of the retaining organ 9, is made by intervening on a handle organ 19 mounted on the superior plane 7, to which a cogwheel 20 is associated and on which cogwheel 20 a transmission chain 21 is mounted: the transmission chain 21 is in its turn mounted on two other cogwheels 22 keyed respectively to the top of the threaded columns 16.

23 denotes a transparent protection wall 23 fixed to the retaining organ 9 and partially closing the chamber of the support structure 2.

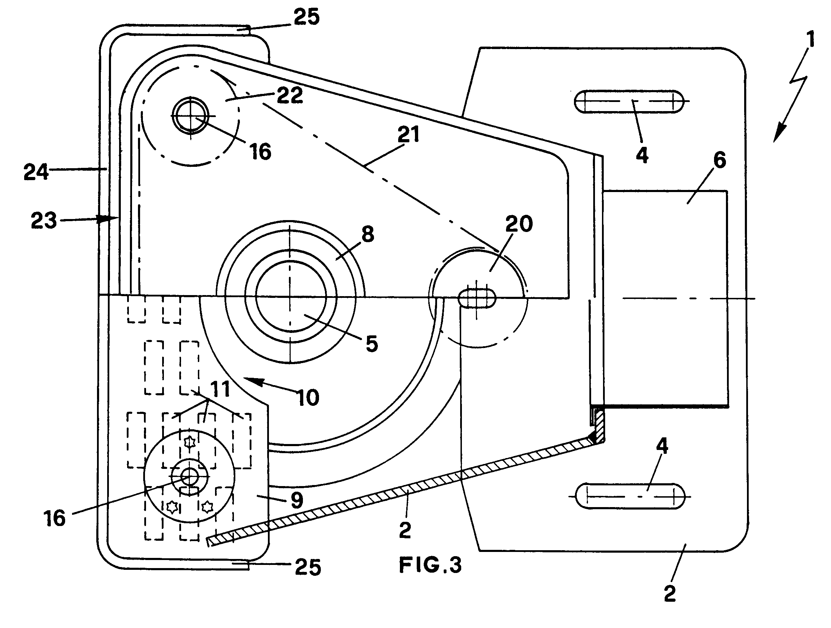

The protection wall 23 exhibits a flat vertical face 24 arranged anteriorly, and two flat vertical lateral faces 25 (see figure 3).

Worthy of note is the fact that all of the regulation operations of the position of the various components of the apparatus are extremely simply, reducing considerably the regulation time.

Furthermore, the protection of the operator is always guaranteed in any work situation.

Finally, the extreme solidity of the apparatus and its constructional and operative simplicity are also worthy of note.

## Claims

1. A protection apparatus for free-shaft working on routers, characterised in that it comprises:
- a support structure (2), movably fixable on a work plane (3) of the router and equipped with a chamber in which a shaft (5) is housed, which shaft (5) projects from the plane (3) of the router and bears one or more groups of rotating tools;
- a retaining organ (9), supported by said support structure (2), inferiorly equipped with a plurality of single retaining elements (11) which are mobile and independent among themselves, said retaining organ (9) permitting of maintaining a workpiece (26) constantly in a desired work position with respect to said groups of rotating tools;
- raising and lowering means (16) of said retaining organ (9) with respect to the plane (3) of the router;
- activating means of said raising and lowering means (16);
- a transparent protection wall (23) solid to said retaining organ (9) partially closing said chamber of said support structure (2).

2. Apparatus as in claim 1, characterised in that said support structure (2) exhibits a plate-shaped base equipped with slots (4) aimed at receiving screws for the removable fixing of said support structure (2) on said plane (3) of the router, said support structure (2) further exhibiting a vertical protection wall equipped with a hole (6) aimed at receiving an aspiration tube of sawings forming in said chamber due to action of said tool group on the workpiece (26), said support structure (2) further exhibiting a superior plane (3) bearing said activating means, said superior plane (3) being equipped with a hole (8) disposed laterally to said shaft (5) projecting from said plane (3) of the router, said hole (8) permitting the passage of said shaft (5) when said shaft (5) is raised above the support structure (2) height.

3. Apparatus as in claim 1, characterised in that said retaining organ (9) is plate-shaped and exhibits laterally a notch (10) at a point where said shaft (5) projects from the plane (3) of the router.

4. Apparatus as in claim 1, characterised in that each of said retaining elements (11) is formed by a shaped body able to rotate, constrasting with a spring (12) action, about a horizontal pivot (13), in a housing (14) made in said retaining organ (9), said shaped body exhibiting a series of teth (15) with pointed profile aligned along a curve of a circle with its centre on an axis of said horizontal pivot (13).

5. Apparatus as in claims 1 and 2, characterised in that said raising and lowering means of said retaining organ (9) are constituted by a pair of threaded columns (16) eqch of which is inferiorly fixed to the retaining organ (9) by means of a connecting flange (17), and superiorly connected to said superior plane (7) of the support structure (2) by means of a threaded bushing (18).

6. Apparatus as in claim 1 and 5, characterised in that said activating means comprise a handle organ (19) mounted on said superior plane (7) of the support structure (2) to which handle organ (19) a cogwheel (20) is associated, on which cogwheel (20) a transmission chain (21) is mounted, which transmission chain (21) is in its turn mounted on further two cogwheels (22) keyed respectively at a top of said threaded columns (16), a vertical movement of the said retaining organ (9) being made possible by acting on said handle organ (19).

7. Apparatus as in claim 1, characterised in that said transparent protection wall (23) exhibits a flat vertical face (24) arranged anteriorly to two flat vertical lateral faces (25).
